# EUROPEAN PATENT APPLICATION

(11) **EP 4 787 510 A1**
(43) Date of publication of application: **05.08.2026**
(21) Application number: 24869958.9
(22) Date of filing: 05.07.2024
(51) Int. Cl.: H01M 10/04

(54) **WINDING BATTERY CELL, CYLINDRICAL BATTERY, AND ELECTRIC DEVICE**

(30) Priority: 28.09.2023 CN 202322680151 U
(71) Applicant: BYD Company Limited, Shenzhen, Guangdong 518118 (CN)
(72) Inventor: YAO, Lyuhua, Shenzhen, Guangdong 518118 (CN); WANG, Jianjun, Shenzhen, Guangdong 518118 (CN); LEI, Lei, Shenzhen, Guangdong 518118 (CN)
(74) Representative: Mathys & Squire
(86) International application number: PCT/CN2024/103738
(87) International publication number: WO 2025/066401

(57) **Abstract**

A winding battery cell (100), a cylindrical battery (1000), and an electric device. The winding battery cell (100) comprises an electrode sheet (20); the electrode sheet (20) comprises an active material coating portion (21) and a tab portion (22); the tab portion (22) comprises a plurality of tabs (221) arranged in the length direction of the electrode sheet (20); the tab portion (22) of a winding starting section (23) is a first tab portion (223); the first tab portion (223) comprises a plurality of first tabs (231); the edge of the side of the first tabs (231) facing a reel hole (10) in a winding direction is a first side edge (2311); the first side edge (2311) obliquely extends towards a winding tail end in the direction from the active material coating portion (21) toward the tab portion (22); in the direction of the active material coating portion (21) toward the tab portion (22), the height of each first tab (231) extending out of the active material coating portion (21) is a first height; and in the winding direction, the heights of the plurality of first tabs (231) increase.

## Description

### CROSS-REFERENCE TO RELATED APPLICATIONS

The present disclosure claims priority to Chinese Patent Application No. 202322680151.3 filed on September 28, 2023, which is incorporated herein by reference in its entirety.

### FIELD

The present disclosure relates to the field of a winding battery cell, a cylindrical battery, and an electric device.

### BACKGROUND

Electrode sheet winding is one of the common production methods for cylindrical battery cells. After electrode sheets are wound, the tabs are flattened and then welded to current collecting plate. In the related art, to prevent interference between tabs and a winding needle during a winding process, no tabs are set at a winding starting section of the electrode sheet, resulting in less coverage of tabs on the electrode sheet, and lower overcurrent capacity of the winding battery cell.

### SUMMARY

The present disclosure aims to at least partially solve one of the above-mentioned technical problems in the prior art.

In view of this, the present disclosure needs to provide a winding battery cell with stronger overcurrent capability.

The present disclosure also provides a cylindrical battery having the above-mentioned winding battery cells.

The present disclosure also provides an electric device which includes the cylindrical battery as described above.

According to the winding battery cell provided in the present disclosure, the winding battery cell is formed by winding, and has a reel hole defined on the inner side, the winding battery cell includes an electrode sheet, the electrode sheet includes an active material coating portion and a tab portion, the tab portion is connected to one side of the active material coating portion in the width direction, the tab portion includes a plurality of tabs arranged in a length direction of the electrode sheet, and one end of the electrode sheet facing the reel hole in the winding direction is a winding starting section, and the other end of the electrode sheet opposite to the winding starting section in the winding direction is a winding tail end. The tab portion of the winding starting section is a first tab portion, and the first tab portion includes a plurality of first tabs, an edge of the side of the first tab facing the reel hole in the winding direction is a first side edge, the first side edge extends obliquely towards the winding tail end in the direction from the active material coating portion towards the tab portion, a height dimension of the first tab extending out of the active material coating portion is a first height in a direction of the active material coating portion facing the tab portion, the first heights of the plurality of first tabs increase in the winding direction.

According to the winding battery cell of an embodiment of the present disclosure, in the winding direction of the winding battery cell, the first heights of the plurality of first tabs are increasing, which expands the coverage area of the tabs on the electrode sheet, thereby enhancing the overcurrent capability of the winding battery cell and increasing the coverage area of the flattened tabs at the end of the winding battery cell, further improving the overcurrent capability of the winding battery cell. Moreover, the number of overlapping layers of the first tabs can be increased, thereby reducing the probability of the first tab being burned through when the current collecting device is welded to the first tab, which could damage the electrode sheet beneath the first tab, and improving the yield of cylindrical batteries. By having the first side edge extend obliquely, the number of overlapping regions between the first tabs can be increased, thereby increasing the number of weldable regions on the first tab. This facilitates the connection between the current collecting device and the first tab, thus, ultimately improving the production efficiency of the cylindrical batteries.

In addition, according to the winding battery cell of the embodiment of the present disclosure may further have the following additional technical features:

According to an embodiment of the present disclosure, among the plurality of first tabs, the first height of the first tab closest to an end portion of end of the winding starting section facing the reel hole is equal to or smaller than 1 mm.

According to an embodiment of the present disclosure, an angle between an inclined extension direction of the first side edge and the length direction of the electrode sheet is a first angle, and along the winding direction, the first angles of the plurality of first tabs increase gradually.

According to an embodiment of the present disclosure, along the winding direction, the first angles of the plurality of first tabs increase linearly.

According to an embodiment of the present disclosure, the first angle of the first tab closest to the end portion of end of the winding starting section facing the reel hole ranges from 20° to 30°.

According to an embodiment of the present disclosure, lengths of the first side edges of the plurality of first tabs are equal.

According to an embodiment of the present disclosure, the first tab has a second side edge arranged opposite to a first side edge in the winding direction, and an end edge of one end of the first tab away from the active material coating portion is a first end edge, the first end edge is connected between the first side edge and the second side edge, and the first end edge is arc connected to both the first side edge and the second side edge.

According to an embodiment of the present disclosure, the first side edge and the second side edge are arranged in parallel, the first end edge is arranged perpendicular to the first side edge and the second side edge, or the first end edge extends in parallel to the length direction of the electrode sheet.

According to an embodiment of the present disclosure, along the winding direction, the first heights of the plurality of first tabs increase linearly.

According to an embodiment of the present disclosure, the plurality of first tabs of the first tab portion are divided into a plurality of tab groups, the plurality of tab groups are sequentially arranged along the winding direction, each tab group includes at least one first tab, the first heights of the plurality of first tabs in each of the tab groups are the same, wherein in the two adjacent tab groups, the first heights of the first tabs of the tab group located on the upstream side in the winding direction are smaller than the first heights of the first tabs of the tab group located on the downstream side in the winding direction.

According to an embodiment of the present disclosure, in the winding direction, a distance between two adjacent tabs is 0.05 mm to 2 mm.

According to an embodiment of the present disclosure, the plurality of tabs are bent towards a side where the reel hole is located, and one end of the plurality of first tabs facing the reel hole is flush with a peripheral wall of the reel hole or is located radially outside the reel hole.

According to an embodiment of the present disclosure, end portions of the plurality of first tabs at the said one end are aligned in an axial direction of the winding battery cell.

According to an embodiment of the present disclosure, the electrode sheet further includes a body section, the body section is connected to one end of the winding starting section away from the reel hole, the tab portion of the body section is a second tab portion including a plurality of second tabs, and in a direction of the active material coating portion facing the tab portion, a height dimension of the second tab extending out of the active material coating portion is a second height, and the second heights of the plurality of second tabs are equal.

According to an embodiment of the present disclosure, the edge of the side of the second tab toward the winding starting section in the winding direction is a third side edge, and in the direction from the active material coating portion towards the tab portion, the third side edge extending obliquely towards the winding tail end.

According to an embodiment of the present disclosure, the tab portion further includes a connection region connected between the active material coating portion and the plurality of tabs.

According to a cylindrical battery provided in the present disclosure, which includes the winding battery cell of the above embodiment.

According to an electric device provided in the present disclosure, which includes the cylindrical battery of the above embodiment.

Additional aspects and advantages of the present disclosure will be set forth in part in the description which follows and, in part, will be obvious from the description, or may be learned by practice of the present disclosure.

### BRIEF DESCRIPTION OF THE DRAWINGS

FIG. 1 is a schematic diagram of a winding battery cell according to an embodiment of the present disclosure;
FIG. 2 is a cross-sectional view of a winding battery cell according to an embodiment of the present disclosure, with the tabs in an unflattened state;
FIG. 3 is a schematic diagram of an electrode sheet according to an embodiment of the present disclosure;
FIG. 4 is a schematic diagram of the winding starting section shown in FIG. 3;
FIG. 5 is a schematic diagram of another electrode sheet according to an embodiment of the present disclosure;
FIG. 6 is a schematic diagram of the winding starting section shown in FIG. 5;
FIG. 7 is a schematic diagram of a cylindrical battery according to an embodiment of the present disclosure.

### Reference number:

1000. cylindrical battery;
100. winding battery cell;
10. reel hole;
20. electrode sheet; 21. active material coating portion; 22. tab portion; 221. tab; 222. connection region; 223. first tab portion; 224. second tab portion; 23. winding starting section; 231. first tab; 2311. first side edge; 2312. second side edge; 2313. first end edge; 24. body section; 241. second tab; 2411. third side edge;
200. current collecting device.

### DETAILED DESCRIPTION

The embodiments of the present disclosure are described in detail below, and examples of the embodiments are shown in the accompanying drawings, where the same or similar reference numerals throughout represent the same or similar elements or elements with the same or similar functions. The embodiments described below with reference to the accompanying drawings are exemplary and intended to explain the present disclosure and will not be construed as limiting the present disclosure.

The following disclosure provides many different embodiments or examples for implementing different structures of the present disclosure. In order to simplify the present disclosure, specific examples of components and settings are described below. Of course, they are only examples and are not intended to limit the scope of the present disclosure. In addition, the present disclosure may repeat reference numbers and/or letters in different examples. This repetition is for the purpose of simplification and clarity and does not in itself indicate the relationship between the various embodiments and/or settings discussed. In addition, the present disclosure provides examples of various specific processes and materials, but those of ordinary skill in the art may recognize the applicability of other processes and/or the use of other materials.

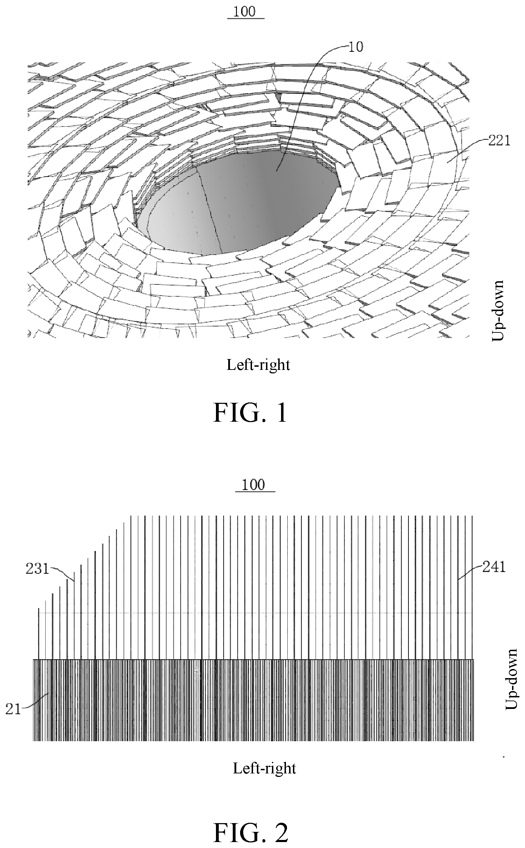

The following describes the winding battery cell 100 according to the first embodiment of the present disclosure with reference to FIGS. 1 to 7.

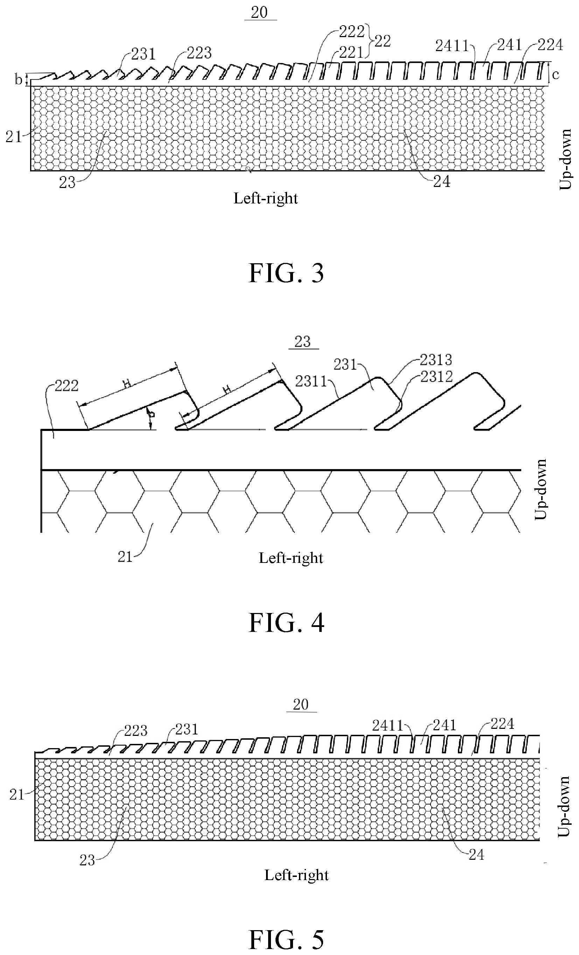

As shown in FIGS. 1 to 3, according to the first embodiment of the present disclosure, the winding battery cell 100 is formed by winding, and has a reel hole 10 defined on the inner side. The winding battery cell 100 includes an electrode sheet 20; the electrode sheet 20 includes an active material coating portion 21 and a tab portion 22. The tab portion 22 is connected to one side of the active material coating portion 21 in the width direction (such as the up-down direction shown in FIG. 3), and the tab portion 22 includes a plurality of tabs 221 arranged in the length direction (such as the left-right direction shown in FIG.3) of the electrode sheet 20. One end of the electrode sheet 20 facing the reel hole 10 (such as the left end of the electrode sheet 20 shown in FIG. 3) in the winding direction (such as the right to left direction shown in FIG. 3) is a winding starting section 23, and the other end of the electrode sheet 20 opposite to the starting section 23 in the winding direction is the winding tail end (such as the right end of the electrode sheet 20 shown in FIG. 3). The tab portion 22 of the winding starting section 23 is a first tab portion 223, the first tab portion 223 includes a plurality of first tabs 231. The edge of the side of the first tab 231 facing the reel hole 10 in the winding direction is a first side edge 2311. In the direction from the active material coating portion 21 towards the tab portion 22, the first side edge 2311 extends obliquely towards the winding tail end. In the direction from the active material coating portion 21 to the tab portion 22, a height dimension of the first tab 231 extending out of the active material coating portion 21 is a first height in the direction of the active material coating portion 21 facing the tab portion 22. That is to say, a distance between the outermost side of the first tab 231 and the upper side edge of the active material coating portion 21 in the direction of the active material coating portion 21 facing the tab portion 22 is formed as the first height, for example, in FIG. 3. In the up-down direction, the distance b between the topmost side of the first tab 231 and the upper side edge of the active material coating portion 21 is formed as the first height, and the first heights of the plurality of first tabs 231 increase in the winding direction.

The active material coating portion 21 is coated with active material. During the discharge process of the winding battery cell 100, the active material coating portion 21 becomes soaked in the electrolyte. The plurality of tabs 221 are connected to the current collecting device 200 and the electrolyte reacts with the active material of the active material coating portion 21 on the electrode sheet 20 to generate current. The current is transmitted to the tabs 221 through the electrode sheet 20, and the tabs 221 output the current externally via the current collecting device 200, thereby realizing the discharge process of the winding battery cell 100.

It will be noted that during the discharge process of the winding battery cell 100, current flows throughout the entire electrode sheet 20. Therefore, increasing the coverage area of the tab 221 on the electrode sheet 20 can enhance the overcurrent capability of the winding battery cell 100. During the process of winding the battery cell 100, as the electrode sheet 20 is wound, the winding diameter of the electrode sheet 20 gradually increases, and the distance between the electrode sheet 20 and the edge of the side of the reel hole 10 also progressively increases.

In this embodiment, by increasing the first heights of the plurality of first tabs 231 in the winding direction of the winding battery cell 100, the first tabs 231 can cover more area of the electrode sheet 20 at one end of the electrode sheet 20 facing the reel hole 10. When the winding battery cell 100 discharges, more tabs 221 can be used to discharge the current on the electrode sheet 20, thereby enhancing the overcurrent capability of the winding battery cell 100.

In one embodiment of the present disclosure, the first height of the first tab 231 and the angle between the inclined extension direction of the first side edge 2311 and the length direction of the electrode sheet can be set according to the distance between the first tab 231 and the edge of the reel hole 10, so that the first height of the first tab 231 and the angle between the inclined extension direction of the first side edge 2311 and the length direction of the electrode sheet 20 are adapted to the distance between the electrode sheet 20 and the edge of the reel hole 10. In this way, after flattening, the first tab 231 can be close to the edge of the reel hole 10, thereby improving the coverage area of the first tab 231 on the circumference of the reel hole 10, and further improving the coverage area of the first tab 231 at the end portion of the winding battery cell 100. Therefore, when the current collecting device 200 is connected to the end portion of the winding battery cell 100, the contact area between the current collecting device 200 and the first tab 231 can be increased, thereby further enhancing the overcurrent capability of the winding battery cell 100.

In addition, after flattening, the first tabs 231 are all close to the edge of the reel hole 10, which can make the end portion of the winding starting section 23 with the first tabs 231 more flat after winding, thus facilitating the connection between the winding battery cell 100 and the current collecting device 200.

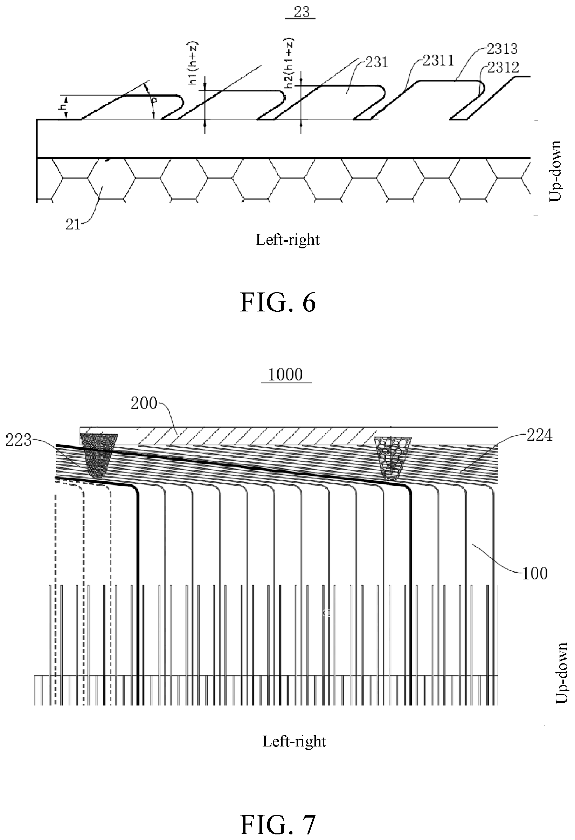

As shown in FIG. 7, in practical applications, the current collecting device 200 is usually welded with the flattened tab 221, and it will be understood in this field that the thickness of the tab 221 is relatively thin, which can make it easy to burn through during the welding process. During the process of winding the electrode sheet 20, the tabs will overlap with the previous round's tabs to form an overlapping area. Welding the current collecting device 200 to the tabs 221 in the overlapping area can reduce the probability of the tabs 221 being burned through and the electrode sheet 20 below the tabs 221 being damaged, thereby improving the yield of cylindrical battery 1000.

In this embodiment, by increasing the first height of the plurality of first tabs 231 in the winding direction of the winding battery cell 100, the downstream first tabs 231 can overlap with more upstream first tabs 231, thereby increasing the number of layers of the first tabs 231 in the overlapping area, thus increasing the thickness of the first tabs 231 in the overlapping area. When welding the current collecting device 200 to the first tabs 231 in the overlapping area, the probability of the first tabs 231 being burned through and the electrode sheet 20 below the first tabs 231 being damaged can be further reduced, thereby further improving the yield of cylindrical battery 1000.

By having the first side edge 2311 extend obliquely toward the winding tail end in the direction from the active material coating portion 21 toward the tab portion 22, adjacent first tabs 231 can be overlapped to form an overlapping area after flattening, thereby increasing the number of overlapping areas. As a result, the number of weldable areas on the first tab 231 can be increased, making it easier to connect the current collecting device 200 to the first tab 231.

According to the winding battery cell 100 of the first embodiment of the present disclosure, the first heights of the plurality of first tabs 231 are increased in the winding direction of the winding battery cell 100, which can increase the coverage area of the tabs 221 on the electrode sheet 20, thereby enhancing the overcurrent capacity of the winding battery cell 100, and can also increase the coverage area of the flattened tabs 221 at the end of the winding battery cell 100, thereby increasing the overcurrent capacity of the winding battery cell 100. In addition, the number of overlapping layers of the first tabs 231 can be increased, thereby reducing the probability of the first tabs 231 being burned through when the current collecting device 200 is welded to the first tabs 231, causing damage to the electrode sheet 20 below the first tabs 231, and improving the quality of the cylindrical battery 1000. By extending diagonally along the first side, the number of overlapping areas between the first tabs 231 can be increased, this can increase the number of weldable areas on the first tab 231, facilitating the connection between the current collecting device 200 and the first tab 231, thereby improving the production efficiency of cylindrical battery 1000.

In some embodiments of the present disclosure, among the multiple first tabs 231, the first height of the first tab 231 at the end portion of the end closest to the winding starting section 23 facing the reel hole 10 is less than or equal to 1mm. For example, the first height of the first tab 231 at the end portion of the end closest to the winding starting section 23 facing the reel hole 10 can be 1mm, 0.5mm, or 0.4mm. In this way, the first height of the first tab 231 located on the upstream side in the winding direction will not be too large. On the electrode sheet 20, the other first tabs 231 in the first tab portion 223 are progressively increased in height based on the first height of the foremost first tab 231 in the winding direction. This ensures that the first tab 231 located in the innermost circle around the winding shaft hole 10 does not protrude into the reel hole 10 after being flattened, thereby enabling normal winding of the electrode sheet 20. In the process of product design, the first height of the foremost first tab 231 in the winding direction can be adjusted to meet more product design needs and reduce product design difficulty.

In some embodiments of the present disclosure, as shown in FIGS. 4 and 6, the angle between the inclined extension direction of the first side edge 2311 and the length direction of the electrode sheet 20 (such as the left-right direction shown in FIG. 4) is the first angle a. Along the winding direction, first angles a of the plurality of the first tabs 231 gradually increase. Thus, it is convenient to gradually increase the first height of the plurality of first tabs 231 in the winding direction and save material for the first tabs 231. At the same time, it can reduce the difficulty of the process, thereby improve production efficiency and reduce production costs.

In some embodiments of the present disclosure, as shown in FIG. 4, first angles a of the plurality of first tabs 231 linearly increases along the winding direction. Thus, during product design, the progressive increase in the first height of the plurality of first tabs 231 can be achieved by adjusting the hypotenuse length of the first angle a according to the increment of the first angle, thereby reducing product design complexity.

In some embodiments of the present disclosure, the first angle a of the first tab 231 at the end portion of the end closest to the winding starting section 23 facing the reel hole 10 is 20° to 30°. For example, the first angle a of the first tab 231 at the end portion of the end closest to the winding starting section 23 facing the reel hole 10 can be 20°, 25°, or 30°. Therefore, the first angle a of the first tab 231 at the end portion of the end closest to the winding starting section 23 facing the reel hole 10 can meet the product design requirements. In the process of product design, the first angle a of the first tab 231 at the end portion of the end closest to the winding starting section 23 facing the reel hole 10 can be adjusted, thus the size of the product can meet more design requirements, and the difficulty of product design can be reduced.

In some embodiments of the present disclosure, as shown in FIG. 4, the lengths H of the first side edge 2311 of the plurality of first tabs 231 are equal. Thus, by increasing the first angle, the first height of the first tab 231 can be gradually increased, thereby reducing the difficulty of product design.

In some embodiments of the present disclosure, as shown in FIGS. 4 and 6, the first tab 231 has a second side edge 2312 arranged opposite to the first side edge 2311 in the winding direction. The end edge of the first tab 231 away from the active material coating portion 21 is the first end edge 2313, the first end edge 2313 is connected between the first side edge 2311 and the second side edge 2312. The first end edge 2313 is arc connected to both the first side edge 2311 and the second side edge 2312. In the process of product design, parameters such as the size and relative angle of the first side edge 2311, the second side edge 2312, and the first end edge 2313 can be adjusted to meet the product design requirements and reduce the difficulty of product design.

By connecting the first end edge 2313 with the first side edge 2311 and the second side edge 2312 in a circular arc, the corner of the first tab 231 is smoother, which can reduce burrs at the corner of the finished product of the first tab 231 during the production process, simplify the production process, and reduce production difficulty. And fewer burrs can reduce the probability of burrs falling off and causing short circuits inside the winding battery cell 100, thereby improving the reliability of the winding battery cell 100 during operation.

In some embodiments of the present disclosure, as shown in FIGS. 4 and 6, the first side edge 2311 and the second side edge 2312 are arranged in parallel, and the first end edge 2313 is arranged perpendicular to the first side edge 2311 and the second side edge 2312, or the first end edge 2313 extends in parallel to the length direction of the electrode sheet 20. When the spatial relationship between the first end edge 2313 and both the first side edge 2311 and the second side edge 2312 varies, the overlapping relationship between the first tabs 231 also changes. Consequently, during product design, the spatial relationship between the first end edge 2313 and both the first side edge 2311 and the second side edge 2312 can be selected according to product design needs to meet more product design requirements.

In some embodiments of the present disclosure, as shown in FIG. 6, the 2nd first tab 231 has a first height h1 greater than the 1st first tab 231's first height h by an increment z, and the third first tab 231 has a first height h2 greater than the 2nd first tab 231's first height h1 by the same increment z. This configuration achieves a progressive increase in the first height of the multiple first tabs 231 along the winding direction. Furthermore, during product design, adjusting the first height h of the foremost first tab 231 in the winding direction and the linear height increment z can directly satisfy design requirements, thereby reducing product design complexity.

In some embodiments of the present disclosure, the electrode sheet 20 includes a positive electrode sheet 20 and a negative electrode sheet 20, with a separator disposed between them. In the direction perpendicular to the axis of the winding battery cell 100, the difference in first height between the first tabs 231 on two adjacent turns of the electrode sheet 20 equals the combined thickness of the positive electrode sheet 20, the negative electrode sheet 20, and two layers of separator. With this configuration, during the winding process of the winding battery cell 100, the positive electrode sheet 20, negative electrode sheet 20, and separator are wound together. After flattening, the first tab 231 on the outer turn aligns with the edge of the first tab 231 on the inner turn, thereby achieving more uniform coverage of the first tabs 231 around the periphery of the reel hole 10.

In some embodiments of the present disclosure, the plurality of first tabs 231 of the first tab portion 223 are divided into a plurality of tab groups, the plurality of tab groups is arranged along sequence along the winding direction. Each tab group includes at least one first tab 231, and the first heights of the plurality of first tabs 231 in each tab group are the same. Among the two adjacent tab groups, the first heights of the first tab 231 of the tab group located on the upstream side of the winding direction are smaller than that of the first tab 231 of the tab group located on the downstream side of the winding direction. As a result, it is possible to increase the first heights of plurality of first tabs 231 in the winding direction. In the production process, the first heights of the first tab 231 of a single tab group are the same, which can reduce production difficulty. In the product design process, adjusting the first heights of the plurality of tab groups can meet design requirements, and the number of adjusted parameters is relatively small, which can reduce product design difficulty.

In some embodiments of the present disclosure, the distance between two adjacent tabs 221 in the winding direction is 0.05 mm to 2 mm. That is, the distance between the two closest side edges of two adjacent tabs 221 in the winding direction is 0.05 mm to 2 mm. For example, the distance between the two adjacent tabs 221 can be 0.05mm, 0.1mm, or 2mm. Therefore, the distance between the two adjacent tabs 221 does not affect the bending of the tabs 221 towards the reel hole 10, and adjacent two tabs 221 can be overlapped. In the process of product design, the distance between the two adjacent tabs 221 can be adjusted to meet more product design requirements and reduce product design difficulty.

In some embodiments of the present disclosure, as shown in FIG. 1, the plurality of tabs 221 are bent towards the side where the reel hole 10 is located, and one end of plurality of first tabs 231 facing the reel hole 10 is flush with the peripheral wall of the reel hole 10 or located radially outward of the reel hole 10. Therefore, the first tab 231 will not affect the winding of the electrode sheet 20 and can further improve the coverage area of the flattened first tab 231 at the end of the winding battery cell 100, further enhancing the overcurrent capability of the winding battery cell 100.

In some embodiments of the present disclosure, end portions of one end of the plurality of first tabs 231 are aligned in the axial direction of the winding battery cell 100. That is, the side edges of the plurality of first tabs 231 closest to the reel hole 10 are aligned in the thickness direction of the first tabs 231, which means the plurality of first tabs 231 overlap after being flattened. This can increase the number of first tabs 231 in the overlapping area, thereby reducing the probability of the first tab 231 being burned through during welding between the current collecting device 200, which would damage the electrode sheet 20 beneath the first tabs 231, and improve the yield of cylindrical battery 1000.

In some embodiments of the present disclosure, as shown in FIGS. 3 and 5, the electrode sheet 20 further includes: a body section 24, the body section 24 is connected to one end of the winding starting section 23 away from the reel hole 10, and the tab portion 22 of the body section 24 is a second tab portion 224, which includes a plurality of second tabs 241. In the direction of the active material coating portion 21 facing the tab portion 22, a height dimension of the second tab 241 extending out of the active material coating portion 21 in the direction of the active material coating portion 21 facing the tab portion 22 is the second height. That is to say, the distance between the outermost edge of the second tab 241 and the outer edge of the active material coating portion 21 in the direction of the active material coating portion 21 facing the tab portion 22 defines the second height, for example, as shown in FIG. 3, In the up-down direction, the distance c between the uppermost side of the second tab 241 and the upper edge of the active material coating portion 21 forms the first height, the second heights of the plurality of second tabs 241 are equal. During the process of winding the tab, the body section 24 is wound around the outer side of the winding starting section 23. When the body section 24 begins to wind, the second height of the first wound second tab 241 is less than or equal to the distance between the electrode sheet 20 corresponding to the first wound second tab 241 and the side edge of the reel hole 10. As the body section 24 continues to be wound, subsequently second tab 241 will not extend into the reel hole 10 after being flattened, and at this time, the periphery of the reel hole 10 has already covered the tab 221. By having the plurality of second tabs 241 with equal second heights, the requirements of covering the tab 221 at the end portion of the winding battery cell 100 is met, while also reducing process complexity and manufacturing costs.

In some embodiments of the present disclosure, as shown in FIGS. 3 and 5, the side edge of the second tab 241 facing the winding starting section 23 in the winding direction is the third side edge 2411. In the direction from the active material coating portion 21 towards the tab portion 22, the third side edge 2411 extends obliquely towards the winding tail end. This configuration gives the second tab 241 a greater length in the direction parallel to the electrode sheet 20. After the tab 221 is flattened, the overlap between the second tab 241 and tabs 221 from the previous turn can be increased. Moreover, after the two adjacent tabs 221 are flattened, the second tab 241 of the latter tab 221 can overlay the second tab 241 of the previous tab 221. As a result, the overlap area between the tabs 221 can be further increased, thereby increasing the weldable area on the tabs 221 and facilitating the welding of the current collecting device 200 and the tabs 221.

In some embodiments of the present disclosure, as shown in FIG. 3, the tab portion 22 further includes a connection region 222, the connection region 222 is connected between the active material coating portion 21 and the plurality of tabs. Providing the connection region 222 allows it to transfer current from the active material coating portion 21 to the plurality of tabs 221, and increases the distance between the end of the winding battery cell 100 and the electrolyte, reducing the likelihood of the current collecting device 200 connected to the plurality of tabs 221 coming into contact with the electrolyte, thus improving the reliability of the winding battery cell 100 during operation.

In some embodiments of the present disclosure, the electrode sheet 20 is produced through a die-cutting process. The die-cutting process offers a high degree of automation and high production precision. As a result, production efficiency can be increased and the production accuracy of electrode sheet 20 can be improved.

According to the cylindrical battery 1000 of the second embodiment of the present disclosure, it includes the winding battery cell 100 according to the first embodiment of the present disclosure.

According to the cylindrical battery 1000 of the second embodiment of the present disclosure, by providing the winding battery cell 100 according to the first embodiment of the present disclosure, the overcurrent capability of the winding battery cell 100 is stronger, thereby improving the efficiency of the cylindrical battery 1000.

In some embodiments of the present disclosure, as shown in FIG. 7, the cylindrical battery 1000 further includes a current collecting device 200, which is provided at the end portion of the winding battery cell 100 and connected to the tabs 221. By providing the current collecting device 200, the current collecting device 200 enables current transfer with the plurality of tabs 221, thereby allowing the cylindrical battery 1000 to achieve charging and discharging functions.

In some embodiments of the present disclosure, the current collecting device 200 is a current collecting plate. The current collecting plate is welded to the tabs 221. The welding connection is simple to perform and enables electrical connection. Thereby, production efficiency can be enhanced, and the functionality of the cylindrical battery 1000 can be ensured.

The following describes the production process of cylindrical battery 1000 according to the embodiments of the present disclosure.

First, die cut the electrode sheet 20 according to the set parameters. The electrode sheet 20 is die-cut according to set parameters, forming the tabs 221 via die-cutting above the connection region 222 based on set parameters. Then, the electrode sheet 20 is wound. After winding is completed, the tabs 221 are pre-bent. Subsequently, the tabs 221 are flattened. Finally, the current collecting plate is welded onto the plurality of flattened tabs 221, thereby completing the production process of the cylindrical battery 1000.

An electric device according to an embodiment of the third aspect of the present disclosure comprises the cylindrical battery 1000 according to the aforementioned embodiment of the second aspect of the present disclosure.

By incorporating the cylindrical battery 1000 according to the embodiment of the second aspect of the present disclosure, the electric device according to the embodiment of the third aspect of the present disclosure benefits from the higher efficiency of the cylindrical battery 1000, thereby enhancing the performance of the electric device.

In the description of this application, it will be understood that the terms "center", "up", "down", "vertical", "horizontal", "top", "bottom", "inside", "outside", "axial", "radial", "circumferential" and other directional or positional relationships indicated are based on the directional or positional relationships shown in the accompanying drawings, only for the convenience of describing this application and simplifying the description, and do not indicate or imply that the device or element referred to must have a specific orientation, be constructed and operated in a specific orientation, and therefore will not be understood as a limitation of this application.

In addition, the terms "first" and "second" are only used for descriptive purposes and will not be understood as indicating or implying relative importance or implying the number of technical features indicated. Thus, the features limited to "first" and "second" may explicitly or implicitly include one or more of these features. In the description of this application, the meaning of "multiple" refers to two or more, unless otherwise specifically limited.

In this application, unless otherwise specified and limited, the terms "installation", "connection", "connection", "fixation", etc. will be broadly understood, for example, they can be fixed connections, detachable connections, or integrated; It can be directly connected or indirectly connected through an intermediate medium, and it can be a connection within two components or an interaction relationship between two components. For ordinary technical personnel in this field, the specific meanings of the above terms in this application will be understood according to the specific situation.

In this application, unless otherwise specified and limited, the first feature may be in direct contact with the second feature "above" or "below" the second feature, or the first and second features may be in indirect contact through intermediate medium. Moreover, the first feature being 'above', 'over', or 'on' the second feature may indicate that the first feature is directly above or diagonally above the second feature, or simply that the first feature is horizontally higher than the second feature. The first feature can be located directly or diagonally below the second feature or simply indicate that the first feature has a lower horizontal height than the second feature.

In the description of this specification, the reference to the terms "one embodiment", "some embodiments", "examples", "specific examples", or "some examples" means that the specific features, structures, materials, or characteristics described in conjunction with the embodiment or example are included in at least one embodiment or example of this application. In this manual, the schematic expressions of the above terms do not necessarily refer to the same embodiments or examples. Moreover, the specific features, structures, materials, or characteristics described can be combined in any one or more embodiments or examples in an appropriate manner. In addition, technicians in this field can combine the different embodiments or examples described in this specification, as well as the features of different embodiments or examples, without conflicting with each other.

Although the embodiments of the present disclosure have been shown and described, those skilled in art can understand that various changes, modifications, substitutions, and variations can be made to these embodiments without departing from the principles and purposes of the present disclosure, and the scope of the present disclosure is limited by the claims and their equivalents.

## Claims

1. A winding battery cell (100), the winding battery cell (100) is formed by winding, and having a reel hole (10) defined on the inner side, the winding battery cell (100) comprising an electrode sheet (20), the electrode sheet (20) comprising an active material coating portion (21) and a tab portion (22), the tab portion (22) being connected to one side of the active material coating portion (21) in the width direction, and the tab portion (22) comprising a plurality of tabs (221) arranged in a length direction of the electrode sheet (20),
one end of the electrode sheet (20) facing the reel hole (10) in the winding direction being a winding starting section (23), and the other end of the electrode sheet (20) opposite to the winding starting section (23) in the winding direction being a winding tail end,
the tab portion (22) of the winding starting section (23) being a first tab portion (223), the first tab portion (223) comprising a plurality of first tabs (231), an edge of the side of the first tab (231) facing the reel hole (10) in the winding direction being a first side edge (2311), and in the direction from the active material coating portion (21) towards the tab portion (22), the first side edge (2311) extending obliquely towards the winding tail end,
in a direction of the active material coating portion (21) facing the tab portion (22), a height dimension of the first tab (231) extending out of the active material coating portion (21) being a first height, and the first heights of the plurality of first tabs (231) increasing in the winding direction.

2. The winding battery cell (100) according to claim 1, wherein among the plurality of first tabs (231), the first height of the first tab (231) closest to an end portion of the end of the winding starting section (23) facing the reel hole (10) equal to or less than 1 mm.

3. The winding battery cell (100) according to claim 1, wherein an angle between an inclined extension direction of the first side edge (2311) and the length direction of the electrode sheet (20) is a first angle, and along the winding direction, the first angles of the plurality of first tabs (231) gradually increases.

4. The winding battery cell (100) according to claim 3, wherein along the winding direction, the first angles of the plurality of first tabs (231) increases linearly.

5. The winding battery cell (100) according to claim 3, wherein the first angle of the first tab (231) closest to the end portion of end of the winding starting section (23) facing the reel hole (10) ranges from 20° to 30°.

6. The winding battery cell (100) according to claim 3, wherein lengths of the first side edges (2311) of the plurality of first tabs (231) are equal.

7. The winding battery cell (100) according to claim 3, wherein the first tab (231) has a second side edge (2312) arranged opposite to the first side edge (2311) in the winding direction, and an end edge of one end of the first tab (231) away from the active material coating portion (21) being a first end edge (2313), the first end edge (2313) being connected between the first side edge (2311) and the second side edge (2312), and the first end edge (2313) being arc connected to both the first side edge (2311) and the second side edge (2312).

8. The winding battery cell (100) according to claim 7, wherein the first side edge (2311) and the second side edge (2312) are arranged in parallel, the first end edge (2313) being arranged perpendicular to the first side edge (2311) and the second side edge (2312), or the first end edge (2313) extending in parallel to the length direction of the electrode sheet (20).

9. The winding battery cell (100) according to any one of claims 1 to 8, wherein along the winding direction, the first heights of the plurality of first tabs (231) increases linearly.

10. The winding battery cell (100) according to any one of claims 1 to 8, wherein the plurality of first tabs (231) of the first tab portion (223) are divided into a plurality of tab groups, the plurality of tab groups being sequentially arranged along the winding direction, each tab group comprising at least one first tab (231), and the first heights of the plurality of first tabs (231) in each tab group being the same,
wherein, in the two adjacent tab groups, the first heights of the first tabs (231) of the tab group located on the upstream side in the winding direction being smaller than the first heights of the first tabs (231) of the tab group located on the downstream side in the winding direction.

11. The winding battery cell (100) according to claim 1, wherein in the winding direction, a distance between two adjacent tabs (221) is 0.05 mm to 2 mm.

12. The winding battery cell (100) according to any one of claims 1 to 11, wherein the plurality of tabs (221) are bent towards a side where the reel hole (10) being located, and one end of the plurality of first tabs (231) facing the reel hole (10) being flush with a peripheral wall of the reel hole (10) or being located radially outside the reel hole (10).

13. The winding battery cell (100) according to claim 12, wherein end portions of the plurality of first tabs (231) at the said one end are aligned in an axial direction of the winding battery cell (100).

14. The winding battery cell (100) according to any one of claims 1 to 13, wherein the electrode sheet (20) further comprises a body section (24), the body section (24) being connected to one end of the winding starting section (23) away from the reel hole (10), the tab portion (22) of the body section (24) being a second tab portion (224), the second tab portion (224) comprising a plurality of second tabs (241), and in a direction of the active material coating portion (21) facing the tab portion (22), a height dimension of the second tab (241) extending out of the active material coating portion (21) being a second height, and the second heights of the plurality of second tabs (241) being equal.

15. The winding battery cell (100) according to claim 14, wherein the edge of the side of the second tab (241) facing the winding starting section (23) in the winding direction is a third side edge (2411), and in the direction from the active material coating portion (21) towards the tab portion (22), the third side edge (2411) extending obliquely towards the winding tail end.

16. The winding battery cell (100) according to any one of claims 1 to 15, wherein the tab portion (22) further comprises a connection region (222), and the connection region (222) being connected between the active material coating portion (21) and the plurality of tabs (221).

17. A cylindrical battery (1000), comprising the winding battery cell (100) according to any one of claims 1 to 16.

18. An electric device, comprising the cylindrical battery (1000) according to claim 17.
